# EUROPÄISCHE PATENTSCHRIFT

(11) **EP 2 941 806 B1**
(45) Veröffentlichungstag und Bekanntmachung des Hinweises auf die Patenterteilung: **29.03.2017**
(21) Anmeldenummer: 14705069.4
(22) Anmeldetag: 05.02.2014
(51) Int. Cl.: H02J 3/14, H04L 12/24, B60L 11/18, H02J 7/00

(54) **VERFAHREN UND VORRICHTUNG ZUR VERKNÜPFUNG VON ELEKTRISCHEN VERBINDUNGEN MIT KOMMUNIKATIONSVERBINDUNGEN**
METHOD AND APPARATUS FOR LINKING ELECTRICAL CONNECTIONS HAVING COMMUNICATION CONNECTIONS
PROCÉDÉ ET DISPOSITIF PERMETTANT D'ÉTABLIR UNE LIAISON ENTRE DES CONNEXIONS ÉLECTRIQUES ET DES CONNEXIONS DE COMMUNICATION

(30) Priorität: 27.03.2013 DE 102013205460
(43) Veröffentlichungstag der Anmeldung: 11.11.2015
(73) Patentinhaber: Siemens Aktiengesellschaft, 80333 München (DE)
(72) Erfinder: HUND, Johannes, 81739 München (DE); RITTER, Thomas, A-1090 Wien (AT)
(86) Internationale Anmeldenummer: PCT/EP2014/052198
(87) Internationale Veröffentlichungsnummer: WO 2014/154385

(56) Entgegenhaltungen:
- EP-A1- 2 541 788
- WO-A1-2010/009502
- WO-A2-2013/023164
- DE-A1-102010 026 689

## Beschreibung

Die vorliegende Erfindung betrifft ein Verfahren, eine Einheit, eine Einrichtung und eine Vorrichtung zur Verknüpfung von zwischen einer Vorrichtung und mehreren Einrichtungen bestehenden elektrischen Verbindungen mit zwischen der Vorrichtung und den mehreren Einrichtungen bestehenden Kommunikationsverbindungen.

Ein intelligentes Stromnetz (englisch Smart Grid) wie beispielsweise ein intelligentes Hausnetz verfügt über Informations- und Kommunikationsmittel, die es ermöglichen, Informationen über das Verhalten von Versorgern und Verbrauchern sowie beispielsweise über den Zustand von Netzwerkelementen zu ermitteln. Diese Informationen können beispielsweise dazu genutzt werden, die Effizienz des Stromnetzes sowie dessen Zuverlässigkeit, Wirtschaftlichkeit und Nachhaltigkeit hinsichtlich der Erzeugung und Verteilung von Elektrizität zu verbessern.

Die Netzwerkelemente eines intelligenten Stromnetzes verfügen daher neben einer elektrischen Verbindung mittels eines elektrischen Anschlusses (englisch Port) zusätzlich über eine Kommunikationsverbindung, über die ein Daten- beziehungsweise Informationsaustausch mit anderen Netzwerkelementen möglich ist.

Ein bekanntes Beispiel für eine derartige Kommunikationsverbindung ist die so genannte Powerline Communication, bei der die elektrische Verbindung zusätzlich zur Energieübertragung auch zur Kommunikationsübermittlung verwendet wird.

Im Vergleich zu anderen Kommunikationstechniken ist die Powerline Communication jedoch weniger ausgereift. Probleme ergeben sich beispielsweise durch unterschiedliche Phasen (Phase Traversal), eine geringe verfügbare Bandbreite, erhebliches Signalrauschen und große Kollisionsdomänen (eine große Zahl an Netzwerkelementen konkurriert um den Zugriff auf dasselbe, begrenzte Übertragungsmedium).

Zudem sind die für die Powerline Communication notwendigen Sende-Empfangs-Einheiten zur Modulation und Demodulation aufwändiger hinsichtlich Herstellung und Kosten als zum Beispiel vergleichbare kommerziell verfügbare Hardware zur drahtgebundenen oder drahtlosen Kommunikation wie optische Netzwerke, Ethernet, WLAN (Wireless Local Area Network) oder WPAN (Wireless Personal Area Network).

Bei der Verwendung derartiger Kommunikationstechniken anstelle der Powerline Communication verfügt jedes Netzwerkelement sowohl über eine elektrische Verbindung als auch über eine zusätzliche, von der elektrischen Verbindung separate Kommunikationsverbindung. Somit stellt jedes derartige Netzwerkelement aus logischer Sicht sowohl einen Knoten im Kommunikationsnetz des betrachteten Smart Grids dar als auch einen Knoten im Stromnetz des betrachteten Smart Grids.

Daraus ergibt sich das Problem einer Verknüpfung dieser beiden Knoten, das heißt die Zuordnung eines jeden Netzwerkelementes zu einem Paar bestehend aus einer elektrischen Verbindung und einer Kommunikationsverbindung: Wenn zwei Vorrichtungen sowohl eine elektrische Verbindung als auch eine zusätzliche, unabhängige Kommunikationsverbindung zum Austausch von Daten untereinander aufbauen (beispielsweise ein Elektrofahrzeug und eine Ladestation mittels WLAN oder ein Smart Home Manager und ein Smart Home Device in einem Hausnetz mittels einer Verbindung gemäß dem Kommunikationsstandard IEEE 802.15.4), muss die genannte Verknüpfung zwischen der elektrischen Verbindung und der Kommunikationsverbindung ermittelt werden, damit im Smart Grid bekannt ist, über welche Kommunikationsverbindung die jeweilige über die elektrische Verbindung mit dem Smart Grid verbundene Vorrichtung kommunikativ erreichbar ist.

Die Komplexität dieses Problems erhöht sich für den Fall, dass zwischen den Netzwerkelementen eines Smart Grids neben 1:1-Beziehungen auch 1:N-Beziehungen möglich sind, beispielsweise für den Fall, dass mehrere Elektrofahrzeuge mit derselben Ladesäule verbunden sind, oder dass mehrere Smart Home Devices mit demselben Smart Home Manager verbunden sind. In zukünftigen Ad-hoc-Smart Grids sind auch N:M-Beziehungen denkbar. In diesen Fällen hat jedes Netzwerkelement nicht nur eine, sondern viele elektrische Verbindungen zum Stromnetz. Denkbar sind zudem mehrere Kommunikationsverbindungen von und zu einem Netzwerkelement.

Weiterhin besteht das Problem, vorhandene, aber noch nicht in das jeweilige Smart Grid eingebundene Altgeräte in das Smart Grid einzubinden, beispielsweise durch eine entsprechende Software-Aktualisierung und/oder durch das Nutzen vorhandener Kommunikationsverbindungen in dem jeweiligen Altgerät. Dies betrifft beispielsweise Set-Top-Boxen, Internet-fähige Fernseher oder Telefone.

Bisher ist es notwendig, dass der Anwender die betreffenden Netzwerkelemente entsprechend manuell konfiguriert, um dem jeweiligen Smart Grid oder Hausnetz bekannt zu machen, welches Gerät mit welchen anderen Geräten über welche Ports verbunden ist. Dies geschieht herkömmlicher Weise mittels einer entsprechenden Benutzungsschnittstelle oder über Konfigurationsdateien. Eine derartige Konfiguration durch den Anwender ist aufwändig und fehleranfällig.

Die WO 2013/023164 A2 offenbart ein Kommunikationsnetzwerk, in dem eine Zuordnung basierend auf Dämpfungspegeln durchgeführt wird. Ein elektrisches Fahrzeug ist dabei eingerichtet, ein Zuordnungsverfahren mit einer oder mehreren Ladestationen durchzuführen, um sich mit einer der Ladestationen zu verbinden und elektrische Energie von dieser zu empfangen.

Demnach ist eine Aufgabe der vorliegenden Erfindung, die Verknüpfung von elektrischen Verbindungen mit Kommunikationsverbindungen in einem Stromnetz zu verbessern.

Demgemäß wird ein Verfahren zur Verknüpfung von zwischen einer Vorrichtung und mehreren Einrichtungen bestehenden elektrischen Verbindungen mit zwischen der Vorrichtung und den mehreren Einrichtungen bestehenden Kommunikationsverbindungen vorgeschlagen. Das Verfahren umfasst eine vorrichtungsseitige Ankündigung eines Tokens durch Senden einer Broadcast-Nachricht über die elektrischen Verbindungen, ein vorrichtungsseitiges Senden des Tokens über eine der elektrischen Verbindungen, ein vorrichtungsseitiges Empfangen des über eine der Kommunikationsverbindungen zurückgesendeten Tokens sowie ein Erstellen einer Verknüpfung zwischen der elektrischen Verbindung, über die das Senden des Tokens erfolgt ist, und der Kommunikationsverbindung, über die das Empfangen des Tokens erfolgt ist.

Bei der Vorrichtung sowie den Einrichtungen handelt es sich beispielsweise um Netzwerkelemente eines Stromnetzes. Insbesondere kann die Vorrichtung als Ladesäule für Elektrofahrzeuge ausgestaltet sein. Die Einrichtungen sind in diesem Fall als Elektrofahrzeuge ausgestaltet, die an der Ladesäule geladen werden können.

Eine elektrische Verbindung dient dabei zur Übertragung elektrischer Energie von oder zu einem Netzwerkelement. Die elektrische Verbindung des Netzwerkelements erfolgt über einen entsprechenden elektrischen Anschluss (englisch Port).

Eine Kommunikationsverbindung dient hingegen zur Übertragung von Daten von oder zu dem Netzwerkelement. Die Kommunikationsverbindung kann beispielsweise drahtlos (WLAN, WPAN), drahtgebunden (Ethernet) oder als optische Verbindung (optisches Netzwerk) ausgestaltet sein.

Bei einem Token handelt es sich um ein Bitmuster. Das jeweilige gesendete Bitmuster wird so gewählt, dass es ein wiedererkennbares Muster darstellt.

Das Verfahren ermöglicht es, mit einem geringen technischen Aufwand Verknüpfungen von elektrischen Verbindungen mit Kommunikationsverbindungen in einem Stromnetz zu erstellen. Insbesondere ermöglicht das Verfahren den Einsatz technisch ausgereifter, einfach aufgebauter und kostengünstiger Kommunikationstechnik. Es ist daher nicht notwendig, die Kommunikationsverbindungen unter Verwendung der elektrischen Verbindung auszugestalten. Insbesondere ist es nicht notwendig, die Kommunikationsverbindungen mittels einer Powerline Communication auszugestalten, wodurch die oben genannten Nachteile vermeidbar sind.

Vorteilhaft wird eine Ankündigung durch eine Broadcast-Übertragung der Nachricht über alle elektrischen Verbindungen erreicht. Das Ankündigen des Sendens eines oder mehrerer Token hat den Vorteil, dass die Einrichtungen im Stromnetz sich auf den Empfang des Tokens vorbereiten können. Auf diese Weise ist sichergestellt, dass die Einrichtungen zum Sendezeitpunkt des Tokens empfangsbereit sind und das Token empfangen können.

In weiteren Ausführungsformen des Verfahrens erfolgt ein Senden jeweils eines individuellen, eindeutigen Tokens über mindestens zwei der elektrischen Verbindungen durch die Vorrichtung sowie ein Empfangen der über mindestens zwei der Kommunikationsverbindungen zurückgesendeten Token durch die Vorrichtung und ein Erstellen jeweils einer Verknüpfung zwischen der jeweiligen elektrischen Verbindung, über die das Senden des jeweiligen Tokens erfolgt ist, und der jeweiligen Kommunikationsverbindung, über die das Empfangen des jeweiligen Tokens erfolgt ist.

Somit ist es möglich, parallel oder sequentiell mehrere Token über mehrere elektrische Verbindungen auszusenden, um auf diese Weise mehrere Paare von elektrischer Verbindung und Kommunikationsverbindung miteinander zu verknüpfen.

Für den Fall eines parallelen Sendens mehrerer Token, beispielsweise in Form einer Multicast-Übertragung über mehrere elektrische Verbindungen, ist jedes Token individuell und eindeutig für die jeweilige elektrische Verbindung, über die es gesendet wird. Auf diese Weise ist jedes Token eindeutig erkennbar, wenn es über eine Kommunikationsverbindung zurückgesendet und von der Vorrichtung empfangen wird, so dass eine eindeutige Zuordnung der jeweiligen elektrischen Verbindung zu der jeweiligen Kommunikationsverbindung möglich ist.

In weiteren Ausführungen des Verfahrens erfolgt das Senden eines Tokens durch die Vorrichtung mittels einer Manipulation mindestens eines Parameters einer der elektrischen Verbindungen.

Die Manipulation eines Parameters der elektrischen Verbindung stellt eine technisch einfache, effiziente und kostengünstige Möglichkeit dar, ein Token zu signalisieren.

In weiteren Ausführungsformen des Verfahrens wird der Parameter durch eine elektrische Spannung der elektrischen Verbindung ausgebildet. Die Manipulation entspricht einer Frequenzmodulation, einer Amplitudenmodulation, einer Amplitudenumtastung und/oder einem Polungswechsel.

Somit ist es beispielsweise sowohl in Wechselstrom- als auch in Gleichstromnetzen möglich, ein Token in einfacher, effizienter und kostengünstiger Weise zu signalisieren. Die verschiedenen Formen der Manipulation sind dabei auch kombinierbar.

Ein Beispiel für eine Modulation wird durch ein wechselndes Ein- und Ausschalten (On-Off-Keying) der elektrischen Spannung in einem vorgegebenen Zeitraster, beispielsweise alle 200ms, ausgebildet. Auf diese Weise kann ein Token in Form eines Bitmusters übertragen werden, beispielsweise 1011001.

In weiteren Ausführungen des Verfahrens wird das Senden eines Tokens durch die Vorrichtung erst nach einer Aufforderung durch eine Einrichtung vorgenommen.

Dies ermöglicht es einer Einrichtung im Stromnetz, eine Verknüpfung durch die Vorrichtung anzufordern, beispielsweise wenn eine solche Verknüpfung für die Einrichtung noch nicht stattgefunden hat. Eine solche Anforderung ist beispielsweise für eine neu in ein bestehendes Stromnetz zu integrierte Einrichtung vorteilhaft, um die elektrische Verbindung sowie die Kommunikationsverbindung der Einrichtung miteinander zu verknüpfen und somit für das Stromnetz kommunikativ erreichbar zu machen.

Weiterhin wird ein Verfahren zur Verknüpfung von zwischen einer Vorrichtung und mehreren Einrichtungen bestehenden elektrischen Verbindungen mit zwischen der Vorrichtung und den mehreren Einrichtungen bestehenden Kommunikationsverbindungen vorgeschlagen, bei dem ein Empfangen eines über eine der elektrischen Verbindungen zwischen der Vorrichtung und einer Einrichtung gesendeten Tokens durch die Einrichtung erfolgt. Weiterhin erfolgt ein Zurücksenden des empfangenen Tokens über die Kommunikationsverbindung der Einrichtung zur Verknüpfung der Kommunikationsverbindung mit der elektrischen Verbindung, über die das Empfangen des Tokens erfolgt ist.

Dieses Verfahren ermöglicht es der Vorrichtung, eine elektrische Verbindung zu einer Einrichtung mit der entsprechenden Kommunikationsverbindung der Einrichtung logisch zu verknüpfen.

In Ausführungsformen des Verfahrens sendet die Einrichtung vor dem Empfangen des Tokens eine Aufforderung für ein Senden eines Tokens über die Kommunikationsverbindung an die Vorrichtung.

Dies ermöglicht es einer Einrichtung im Stromnetz, eine Verknüpfung durch die Vorrichtung anzufordern, beispielsweise wenn eine solche Verknüpfung für die Einrichtung noch nicht stattgefunden hat. Eine solche Anforderung ist beispielsweise für eine neu in ein bestehendes Stromnetz zu integrierte Einrichtung vorteilhaft, um die elektrische Verbindung sowie die Kommunikationsverbindung der Einrichtung miteinander zu verknüpfen und somit für das Stromnetz kommunikativ erreichbar zu machen.

In weiteren Ausführungsformen des Verfahrens modifiziert die Einrichtung das empfangene Token vor dem Zurücksenden mittels einer kryptographischen Funktion und sendet das modifizierte Token an die Vorrichtung zurück.

Das Modifizieren des Tokens mittels einer kryptographischen Funktion stellt ein Verschlüsseln des empfangenen Tokens dar, so dass das Token lediglich auf der elektrischen Verbindung im Klartext übermittelt wird, während das Zurücksenden über die Kommunikationsverbindung in verschlüsselter Form erfolgt. Einem Angreifer ist es somit nicht möglich, die Verknüpfung zwischen der elektrischen Verbindung und der Kommunikationsverbindung vorzunehmen, da er nicht über den notwendigen Schlüssel zur Entschlüsselung des verschlüsselten Tokens verfügt. Zudem ist es nicht möglich, dass ein Dritter das Token zurücksendet, da nur die jeweilige Einrichtung den notwendigen Schlüssel besitzt.

Auf diese Weise wird ein Vertrauensverhältnis zwischen der Vorrichtung und den Einrichtungen aufgebaut.

Die kryptographische Funktion kann vorteilhaft als Hash-Funktion ausgebildet sein, wobei ein Hashwert aus dem binär vorliegenden Token erzeugt wird. Der errechnete Hashwert wird über die Kommunikationsverbindung an die Vorrichtung zurückgesendet. Die Vorrichtung kann aus dem Hashwert das ursprüngliche Token ableiten und somit beispielsweise sicherstellen, dass das Token tatsächlich von der jeweiligen Einrichtung zurückgesendet wurde.

Weiterhin wird ein Computerprogrammprodukt vorgeschlagen, welches auf einer programmgesteuerten Einrichtung die Durchführung eines entsprechenden Verfahrens veranlasst.

Ein Computerprogramm-Produkt wie ein Computerprogramm-Mittel kann beispielsweise als Speichermedium, wie Speicherkarte, USB-Stick, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogramm-Produkt oder dem Computerprogramm-Mittel erfolgen. Als programmgesteuerte Einrichtung kommt insbesondere eine wie vorbeschriebene Vorrichtung, Einheit oder Einrichtung in Frage.

Weiterhin wird ein Datenträger mit einem gespeicherten Computerprogramm mit Befehlen vorgeschlagen, welche die Durchführung eines entsprechenden Verfahrens auf einer programmgesteuerten Einrichtung veranlasst.

Weiterhin wird eine Einheit zur Verknüpfung von zwischen einer die Einheit umfassenden Vorrichtung und mehreren Einrichtungen bestehenden elektrischen Verbindungen mit zwischen der Vorrichtung und den mehreren Einrichtungen bestehenden Kommunikationsverbindungen vorgeschlagen. Die Einheit hat ein Sendemittel zum Senden eines Tokens über eine der elektrischen Verbindungen, ein Empfangsmittel zum Empfangen des über eine der Kommunikationsverbindungen zurückgesendeten Tokens sowie ein Verknüpfungsmittel zum Erstellen einer Verknüpfung zwischen der elektrischen Verbindung, über die das Senden des Tokens erfolgt ist, und der Kommunikationsverbindung, über die das Empfangen des Tokens erfolgt ist.

Alternativ kann das Verknüpfungsmittel Bestandteil einer weiteren Vorrichtung sein, beispielsweise eines weiteren Netzwerkelementes im intelligenten Stromnetz. Auf diese Weise ist es möglich, die Verknüpfung auch an anderer Stelle im Stromnetz vorzunehmen und die Verknüpfung so beispielsweise zentralisiert für mehrere Einheiten im Stromnetz durchzuführen.

Die vorgeschlagene Einheit ermöglicht es, mit einem geringen technischen Aufwand Verknüpfungen von elektrischen Verbindungen mit Kommunikationsverbindungen in einem Stromnetz zu erstellen. Insbesondere ermöglicht die Einheit den Einsatz technisch ausgereifter, einfach aufgebauter und kostengünstiger Kommunikationstechnik. Es ist daher nicht notwendig, die Kommunikationsverbindungen unter Verwendung der elektrischen Verbindung auszugestalten. Insbesondere ist es nicht notwendig, die Kommunikationsverbindungen mittels einer Powerline Communication auszugestalten, wodurch die oben genannten Nachteile vermeidbar sind.

In Ausführungsformen ist die Einheit als ein Smart Grid Manager eines Smart Grids ausgebildet.

Ein Smart Grid Manager ist beispielsweise ein Smart Home Manager, der über eine IP-Verbindung wie beispielsweise ein drahtloses Interface gemäß dem Standard IEEE 802.15.4 oder WLAN kommunikativ mit den Einrichtungen verbunden ist.

Dies ermöglicht den Einsatz der vorgeschlagenen Einheit zum Beispiel in einem intelligenten Hausnetz.

Weiterhin wird eine Vorrichtung, insbesondere eine Ladesäule für ein Elektrofahrzeug, vorgeschlagen. Die Vorrichtung umfasst eine zuvor beschriebene Einheit.

Die vorgeschlagene Vorrichtung erlaubt es, mit einem geringen technischen Aufwand Verknüpfungen von elektrischen Verbindungen mit Kommunikationsverbindungen in einem Stromnetz zu erstellen, beispielsweise für den Fall einer Ladesäule als Teil einer Ladeinfrastruktur für Elektrofahrzeuge.

Weiterhin wird eine Einrichtung zur Verknüpfung von zwischen einer Vorrichtung und mehreren Einrichtungen bestehenden elektrischen Verbindungen mit zwischen der Vorrichtung und den mehreren Einrichtungen bestehenden Kommunikationsverbindungen vorgeschlagen. Die Einrichtung hat ein Empfangsmittel zum Empfangen eines über eine elektrische Verbindung zwischen der Vorrichtung und der Einrichtung gesendeten Tokens sowie ein Sendemittel zum Zurücksenden des empfangenen Tokens über die Kommunikationsverbindung der Einrichtung an die Vorrichtung.

Die vorgeschlagene Einrichtung ermöglicht es, mit einem geringen technischen Aufwand Verknüpfungen von elektrischen Verbindungen mit Kommunikationsverbindungen in einem Stromnetz zu erstellen.

In Ausführungsformen ist die Einrichtung als ein Smart Grid Node eines Smart Grids ausgebildet, beispielsweise als ein intelligenter Verbraucher in Form eines Kühlschranks in einem intelligenten Hausnetz. Der intelligente Verbraucher ist über seine elektrische Verbindung mit einem Stromanschluss verbunden, der von einem Smart Home Manager kontrolliert wird. Die Kommunikationsverbindung ist beispielsweise als eine IP-Verbindung wie beispielsweise ein drahtloses Interface gemäß dem Standard IEEE 802.15.4 oder eine WLAN-Verbindung ausgebildet.

Weiterhin wird ein Elektrofahrzeug zum Laden an einer Ladesäule vorgeschlagen. Das Elektrofahrzeug umfasst eine wie oben beschriebene Einrichtung.

Für ein derartiges Elektrofahrzeug kann eine Verknüpfung einer elektrischen Verbindung zu einer Ladesäule einer Ladeinfrastruktur mit einer Kommunikationsverbindung des Elektrofahrzeugs vorgenommen werden. Auf diese Weise ist es möglich, beispielsweise mehrere Elektrofahrzeuge gleichzeitig und parallel zu laden, wobei eine Verknüpfung der jeweils zu den Elektrofahrzeugen gehörigen Kommunikationsverbindungen mit den jeweiligen elektrischen Verbindungen zwischen den Elektrofahrzeugen und der Ladesäule ermöglicht wird. Dies erlaubt beispielsweise eine individuelle Abrechnung der durch die Ladesäule erbrachten Dienstleistungen.

Weitere mögliche Implementierungen der Erfindung umfassen auch nicht explizit genannte Kombinationen von zuvor oder im Folgenden bezüglich der Ausführungsbeispiele beschriebenen Verfahrensschritte, Merkmale oder Ausführungsformen des Verfahrens oder der Vorrichtung, der Einrichtung oder der Einheit. Dabei wird der Fachmann auch Einzelaspekte als Verbesserungen oder Ergänzungen zu der jeweiligen Grundform der Erfindung hinzufügen oder abändern.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Dabei zeigen:
- Fig. 1: ein Blockschaltbild eines Ausführungsbeispiels mit einer Vorrichtung, einer Einheit und zwei Einrichtungen; und
- Fig. 2: ein Ablaufdiagramm eines Ausführungsbeispiels eines Verfahrens zur Verknüpfung von zwischen einer Vorrichtung und mehreren Einrichtungen bestehenden elektrischen Verbindungen mit zwischen der Vorrichtung und den mehreren Einrichtungen bestehenden Kommunikationsverbindungen.

In den Figuren sind gleiche oder funktionsgleiche Elemente mit denselben Bezugszeichen versehen worden, sofern nichts anderes angegeben ist.

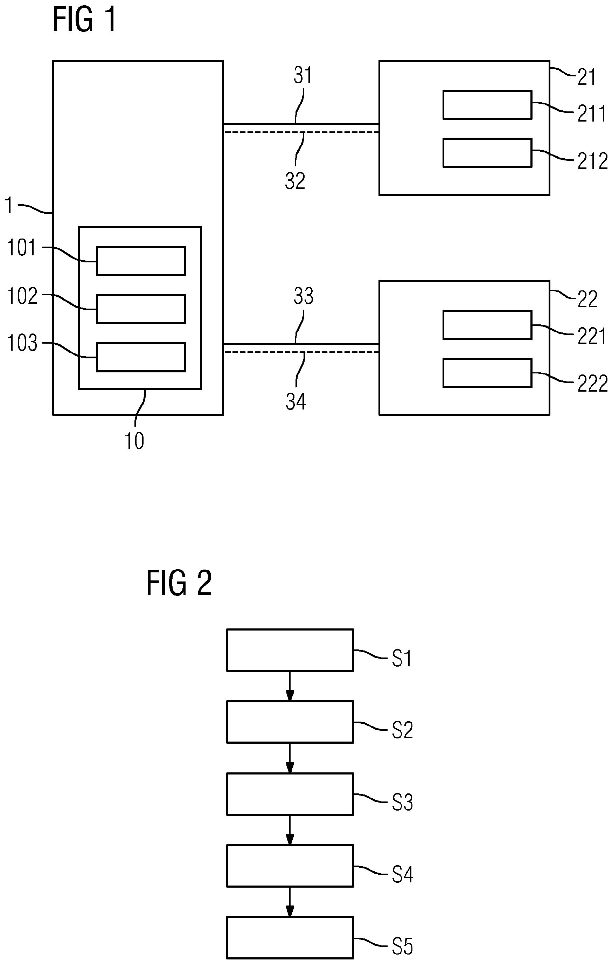

Fig. 1 zeigt ein Blockschaltbild eines Ausführungsbeispiels mit einer Vorrichtung 1, einer Einheit 10 und zwei Einrichtungen 21, 22. Die Vorrichtung 1 stellt dabei eine Ladesäule in einer Lade-Infrastruktur für Elektrofahrzeuge dar und umfasst die Einheit 10. Die Einrichtungen 21, 22 sind Teil jeweils eines (in Fig. 1 nicht dargestellten) Elektrofahrzeugs. Die Einrichtungen 21, 22 der Elektrofahrzeuge sind jeweils über eine elektrische Verbindung 31, 33 und eine Kommunikationsverbindung 32, 34 mit der Ladesäule 1 verbunden.

Die elektrischen Verbindungen 31, 33 dienen der Übertragung elektrischer Energie zum Laden der Elektrofahrzeuge. Die Kommunikationsverbindungen 32, 34, beispielsweise WLAN-Verbindungen, WPAN-Verbindungen oder Verbindungen über Near Field Communication, dienen beispielsweise zur Anforderung der jeweils gewünschten Lade- oder sonstigen Service-Leistung oder zu Abrechnungszwecken bezüglich der durch die Ladesäule 1 erbrachten Lade- oder sonstigen Service-Leistung.

Die Einheit 10 der Ladesäule 1 sowie die Einrichtungen 21, 22 der mit der Ladesäule 1 verbundenen Elektrofahrzeuge weisen jeweils ein Sendemittel 101, 211, 221 sowie ein Empfangsmittel 102, 212, 222 zum Senden beziehungsweise Empfangen eines Tokens über die jeweilige elektrische Verbindung 31, 33 oder die jeweilige Kommunikationsverbindung 32, 34 auf.

Die Einheit 10 umfasst zudem ein Verknüpfungsmittel 103. Das Verknüpfungsmittel 103 ermöglicht die Verknüpfung der zwischen der Ladesäule 1 und der Einrichtung 21 bestehenden elektrischen Verbindung 31 mit der zwischen der Ladesäule 1 und der Einrichtung 21 bestehenden Kommunikationsverbindung 32 sowie der zwischen der Ladesäule 1 und der Einrichtung 22 bestehenden elektrischen Verbindung 33 mit der zwischen der Ladesäule 1 und der Einrichtung 22 bestehenden Kommunikationsverbindung 34.

In dem in Fig. 1 gezeigten Ausführungsbeispiel stellt die Einheit 10 einen Smart Grid Manager dar, während die Einrichtungen 21, 22 jeweils einen Smart Grid Node darstellen. Das entsprechende Smart Grid oder intelligente Stromnetz wird dabei durch die Elemente der Ladeinfrastruktur ausgebildet.
Fig. 1 zeigt somit lediglich einen Ausschnitt eines komplexeren intelligenten Stromnetzes.

Fig. 2 zeigt ein Ablaufdiagramm eines Ausführungsbeispiels eines Verfahrens zur Verknüpfung der zwischen der in Fig. 1 dargestellten Ladesäule 1 und den Einrichtungen 21, 22 bestehenden elektrischen Verbindungen 31, 33 mit den zwischen der Ladesäule 1 und den Einrichtungen 21, 22 bestehenden Kommunikationsverbindungen 32, 34.

In der in Fig. 1 dargestellten Situation sind die elektrischen Verbindungen 31, 33 noch nicht mit den Kommunikationsverbindungen 32, 34 verknüpft, so dass der Ladesäule 1 noch nicht bekannt ist, welche der elektrischen Verbindungen 31, 33 zu welcher der Kommunikationsverbindungen 32, 34 gehört. In dieser Situation kann die Ladesäule 1 zwar ermitteln, welche Energiemenge über die jeweilige elektrische Verbindung 31, 33 bezogen wird; es ist der Ladesäule 1 aber nicht möglich, sich im Rahmen einer Dienstleistung wie einem Ladevorgang oder zu Abrechnungszwecken kommunikativ an den jeweiligen Bezieher der Dienstleistung, das heißt im vorliegenden Fall an das jeweilige Elektrofahrzeug, zu wenden.

Um eine Verknüpfung der zwischen der in Fig. 1 dargestellten Ladesäule 1 und der Einrichtung 21 bestehenden elektrischen Verbindung 31 mit der zwischen der Ladesäule 1 und der Einrichtung 21 bestehenden Kommunikationsverbindung 32 sowie der zwischen der Ladesäule 1 und der Einrichtung 22 bestehenden elektrischen Verbindung 33 mit der zwischen der Ladesäule 1 und der Einrichtung 22 bestehenden Kommunikationsverbindung 34 zu erreichen, erfolgt wie in Fig. 2 dargestellt in einem ersten Schritt S1 ein Senden jeweils eines individuellen, eindeutigen Tokens über jede der beiden elektrischen Verbindungen 31, 33 durch die Einheit 10 der Ladesäule 1. Das Senden der Token kann dabei parallel oder zeitversetzt erfolgen.

In einem zweiten Schritt S2 erfolgt jeweils ein Empfangen des über die jeweilige elektrische Verbindung 31, 33 zwischen der Ladesäule 1 und der jeweiligen Einrichtung 21, 22 gesendeten Tokens durch die Einrichtungen 21, 22 der Elektrofahrzeuge. Die Einrichtungen 21, 22 senden daraufhin in einem dritten Schritt S3 das empfangene Token über die jeweilige Kommunikationsverbindung 32, 34 zurück.

In einem vierten Schritt S4 erfolgt ein Empfangen der über die Kommunikationsverbindungen 32, 34 zurückgesendeten Token durch die Einheit 10 der Ladesäule 1.

Da die über die elektrischen Verbindungen 31, 33 gesendeten Token eindeutig und individuell für die jeweilige elektrische Verbindung 31, 33 sind, kann somit die Verknüpfung der zwischen der in Fig. 1 dargestellten Ladesäule 1 und der Einrichtung 21 bestehenden elektrischen Verbindung 31 mit der zwischen der Ladesäule 1 und der Einrichtung 21 bestehenden Kommunikationsverbindung 32 sowie der zwischen der Ladesäule 1 und der Einrichtung 22 bestehenden elektrischen Verbindung 33 mit der zwischen der Ladesäule 1 und der Einrichtung 22 bestehenden Kommunikationsverbindung 34 erfolgen.

Daher erfolgt in einem fünften Schritt S5 ein Erstellen jeweils einer Verknüpfung zwischen der jeweiligen elektrischen Verbindung 31, 33, über die das Senden des jeweiligen Tokens erfolgt ist, und der jeweiligen Kommunikationsverbindung 32, 34, über die das Empfangen des jeweiligen Tokens erfolgt ist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Verknüpfung von zwischen einer Vorrichtung (1) und mehreren Einrichtungen (21, 22) bestehenden elektrischen Verbindungen (31, 33) mit zwischen der Vorrichtung (1) und den mehreren Einrichtungen (21, 22) bestehenden Kommunikationsverbindungen (32, 34), mit den Schritten:
- Ankündigen eines Tokens durch die Vorrichtung (1) durch Senden einer Broadcast-Nachricht über die elektrischen Verbindungen (31, 33);
- Senden (S1) des Tokens über eine der elektrischen Verbindungen (31, 33) durch die Vorrichtung (1);
- Empfangen (S4) des über eine der Kommunikationsverbindungen (32, 34) zurückgesendeten Tokens durch die Vorrichtung (1); und
- Erstellen (S5) einer Verknüpfung zwischen der elektrischen Verbindung (31, 33), über die das Senden des Tokens erfolgt ist, und der Kommunikationsverbindung (32, 34), über die das Empfangen des Tokens erfolgt ist.

2. Verfahren nach Anspruch 1,
**gekennzeichnet durch**:
- Senden (S1) jeweils eines individuellen, eindeutigen Tokens über mindestens zwei der elektrischen Verbindungen (31, 33) durch die Vorrichtung (1);
- Empfangen (S4) der über mindestens zwei der Kommunikationsverbindungen (32, 34) zurückgesendeten Token **durch** die Vorrichtung (1) ; und
- Erstellen (S5) jeweils einer Verknüpfung zwischen der jeweiligen elektrischen Verbindung (31, 33), über die das Senden des jeweiligen Tokens erfolgt ist, und der jeweiligen Kommunikationsverbindung (32, 34), über die das Empfangen des jeweiligen Tokens erfolgt ist.

3. Verfahren nach einem der vorstehenden Ansprüche,
**dadurch gekennzeichnet,**
**dass** das Senden (S1) des Tokens durch die Vorrichtung (1) mittels einer Manipulation mindestens eines Parameters einer der elektrischen Verbindungen (31, 33) erfolgt.

4. Verfahren nach einem der vorstehenden Ansprüche,
**dadurch gekennzeichnet,**
**dass** der Parameter durch eine elektrische Spannung der elektrischen Verbindung (31, 33) ausgebildet wird, und dass die Manipulation mindestens einem der folgenden entspricht:
- einer Frequenzmodulation;
- einer Amplitudenmodulation;
- einer Amplitudenumtastung; und/oder
- einem Polungswechsel.

5. Verfahren nach einem der vorstehenden Ansprüche,
**dadurch gekennzeichnet,**
**dass** das Senden (S1) eines Tokens durch die Vorrichtung (1) erst nach einer Aufforderung durch eine Einrichtung (21, 22) vorgenommen wird.

6. Verfahren zur Verknüpfung von zwischen einer Vorrichtung (1) und mehreren Einrichtungen (21, 22) bestehenden elektrischen Verbindungen (31, 33) mit zwischen der Vorrichtung (1) und den mehreren Einrichtungen (21, 22) bestehenden Kommunikationsverbindungen (32, 34), mit den Schritten:
- Empfangen einer Broadcast-Nachricht über die elektrischen Verbindungen (31, 33) und Vorbereitung zum Empfang eines Tokens durch die Einrichtung (21, 22);
- Empfangen (S2) des über eine der elektrischen Verbindungen (31, 33) zwischen der Vorrichtung (1) und einer Einrichtung (21, 22) gesendeten Tokens durch die Einrichtung (21, 22); und
- Zurücksenden (S3) des empfangenen Tokens über die Kommunikationsverbindung (32, 34) der Einrichtung (21, 22) zur Verknüpfung der Kommunikationsverbindung (32, 34) mit der elektrischen Verbindung (31, 33), über die das Empfangen des Tokens erfolgt ist.

7. Verfahren nach Anspruch 6,
**dadurch gekennzeichnet,**
**dass** die Einrichtung (21, 22) vor dem Empfangen (S2) des Tokens eine Aufforderung für ein Senden eines Tokens über die Kommunikationsverbindung (32, 34) an die Vorrichtung (1) sendet.

8. Verfahren nach Anspruch 6 oder 7,
**dadurch gekennzeichnet,**
**dass** die Einrichtung (21, 22) das empfangene Token vor dem Zurücksenden (S3) mittels einer kryptographischen Funktion modifiziert und das modifizierte Token an die Vorrichtung (1) zurücksendet.

9. Einheit (10) zur Verknüpfung von zwischen einer die Einheit (10) umfassenden Vorrichtung (1) und mehreren Einrichtungen (21, 22) bestehenden elektrischen Verbindungen (31, 33) mit zwischen der Vorrichtung (1) und den mehreren Einrichtungen (21, 22) bestehenden Kommunikationsverbindungen (32, 34), mit:
- einem Sendemittel (101) zum Senden (S1) einer ein Token ankündigenden Broadcast-Nachricht über die elektrischen Verbindungen (31, 33);
- einem Sendemittel (101) zum Senden (S1) eines Tokens über eine der elektrischen Verbindungen (31, 33);
- einem Empfangsmittel (102) zum Empfangen (S4) des über eine der Kommunikationsverbindungen (32, 34) zurückgesendeten Tokens; und
- einem Verknüpfungsmittel (103) zum Erstellen (S5) einer Verknüpfung zwischen der elektrischen Verbindung (31, 33), über die das Senden des Tokens erfolgt ist, und der Kommunikationsverbindung (32, 34), über die das Empfangen des Tokens erfolgt ist.

10. Einheit (10) nach Anspruch 9,
**dadurch gekennzeichnet,**
**dass** die Einheit (10) als ein Smart Grid Manager eines Smart Grids ausgebildet ist.

11. Vorrichtung (1), insbesondere Ladesäule für ein Elektrofahrzeug, mit einer Einheit (10) nach Anspruch 9 oder 10.

12. Einrichtung (21, 22) zur Verknüpfung von zwischen einer Vorrichtung (1) und mehreren Einrichtungen (21, 22) bestehenden elektrischen Verbindungen (31, 33) mit zwischen der Vorrichtung (1) und den mehreren Einrichtungen (21, 22) bestehenden Kommunikationsverbindungen (32, 34), mit:
- einem Empfangsmittel (212, 222) zum Empfangen (S2) einer ein Token ankündigenden Broadcast-Nachricht über die elektrischen Verbindungen (31, 33);
- einem Empfangsmittel (212, 222) zum Empfangen (S2) eines über eine elektrische Verbindung (31, 33) zwischen der Vorrichtung (1) und der Einrichtung (21, 22) gesendeten Tokens; und
- einem Sendemittel (211, 221) zum Zurücksenden (S3) des empfangenen Tokens über die Kommunikationsverbindung (32, 34) der Einrichtung (21, 22) an die Vorrichtung (1) zur Verknüpfung der Kommunikationsverbindung (32, 34) mit der elektrischen Verbindung (31, 33), über die das Empfangen des Tokens erfolgt ist.

13. Einrichtung (21, 22) nach Anspruch 12,
**dadurch gekennzeichnet,**
**dass** die Einrichtung (21, 22) als ein Smart Grid Node eines Smart Grids ausgebildet ist.

14. Elektrofahrzeug zum Laden an einer Ladesäule, mit einer Einrichtung (21, 22) nach Anspruch 12 oder 13.

## Claims

1. Method for linking electrical connections (31, 33) between an apparatus (1) and a plurality of devices (21, 22) to communication connections (32, 34) between the apparatus (1) and the plurality of devices (21, 22), having the following steps:
- the apparatus (1) announces a token by transmitting a broadcast message via the electrical connections (31, 33);
- the apparatus (1) transmits (S1) the token via one of the electrical connections (31, 33);
- the apparatus (1) receives (S4) the token returned via one of the communication connections (32, 34); and
- a link is created (S5) between the electrical connection (31, 33), via which the token is transmitted, and the communication connection (32, 34), via which the token is received.

2. Method according to Claim 1,
**characterized by**:
- transmission (S1) of a respective individual unique token by the apparatus (1) via at least two of the electrical connections (31, 33);
- reception (S4) of the tokens returned via at least two of the communication connections (32, 34) by the apparatus (1) ; and
- creation (S5) of a respective link between the respective electrical connection (31, 33), via which the respective token is transmitted, and the respective communication connection (32, 34), via which the respective token is received.

3. Method according to one of the preceding claims, **characterized in that**
the apparatus (1) transmits (S1) the token by manipulating at least one parameter of one of the electrical connections (31, 33).

4. Method according to one of the preceding claims, **characterized in that**
the parameter is formed by an electrical voltage of the electrical connection (31, 33), and **in that** the manipulation corresponds to at least one of the following:
- frequency modulation;
- amplitude modulation;
- amplitude shift keying; and/or
- a polarity change.

5. Method according to one of the preceding claims, **characterized in that**
the apparatus (1) transmits (S1) a token only after a request from a device (21, 22).

6. Method for linking electrical connections (31, 33) between an apparatus (1) and a plurality of devices (21, 22) to communication connections (32, 34) between the apparatus (1) and the plurality of devices (21, 22), having the following steps:
- the device (21, 22) receives a broadcast message via the electrical connections (31, 33) and prepares to receive a token;
- the device (21, 22) receives (S2) the token transmitted between the apparatus (1) and a device (21, 22) via one of the electrical connections (31, 33); and
- the received token is returned (S3) via the communication connection (32, 34) of the device (21, 22) in order to link the communication connection (32, 34) to the electrical connection (31, 33) via which the token is received.

7. Method according to Claim 6,
**characterized in that**
before receiving (S2) the token, the device (21, 22) transmits a request for transmission of a token to the apparatus (1) via the communication connection (32, 34).

8. Method according to Claim 6 or 7,
**characterized in that**
the device (21, 22) modifies the received token by means of a cryptographic function before returning (S3) it and returns the modified token to the apparatus (1).

9. Unit (10) for linking electrical connections (31, 33) between an apparatus (1) comprising the unit (10) and a plurality of devices (21, 22) to communication connections (32, 34) between the apparatus (1) and the plurality of devices (21, 22), having:
- a transmitting means (101) for transmitting (S1) a broadcast message announcing a token via the electrical connections (31, 33);
- a transmitting means (101) for transmitting (S1) a token via one of the electrical connections (31, 33);
- a receiving means (102) for receiving (S4) the token returned via one of the communication connections (32, 34); and
- a linking means (103) for creating (S5) a link between the electrical connection (31, 33), via which the token is transmitted, and the communication connection (32, 34), via which the token is received.

10. Unit (10) according to Claim 9,
**characterized in that**
the unit (10) is in the form of a smart grid manager of a smart grid.

11. Apparatus (1), in particular charging post for an electric vehicle, having a unit (10) according to Claim 9 or 10.

12. Device (21, 22) for linking electrical connections (31, 33) between an apparatus (1) and a plurality of devices (21, 22) to communication connections (32, 34) between the apparatus (1) and the plurality of devices (21, 22), having:
- a receiving means (212, 222) for receiving (S2) a broadcast message announcing a token via the electrical connections (31, 33);
- a receiving means (212, 222) for receiving (S2) a token transmitted between the apparatus (1) and the device (21, 22) via an electrical connection (31, 33); and
- a transmitting means (211, 221) for returning (S3) the received token to the apparatus (1) via the communication connection (32, 34) of the device (21, 22) in order to link the communication connection (32, 34) to the electrical connection (31, 33) via which the token is received.

13. Device (21, 22) according to Claim 12,
**characterized in that**
the device (21, 22) is in the form of a smart grid node of a smart grid.

14. Electric vehicle for charging at a charging post, having a device (21, 22) according to Claim 12 or 13.

## Revendications

1. Procédé pour établir une liaison entre des connexions électriques (31, 33) existant entre un appareil (1) et plusieurs dispositifs (21, 22) et des connexions de communication (32, 34) existant entre ledit appareil (1) et lesdits plusieurs dispositifs (21, 22), comprenant les étapes :
- annonce d'un jeton par l'appareil (1) en envoyant un message de diffusion via les connexions électriques (31, 33) ;
- envoi (S1) du jeton via l'une des connexions électriques (31, 33) par l'appareil (1) ;
- réception (S4) du jeton renvoyé via l'une des connexions de communication (32, 34) par l'appareil (1) ; et
- établissement (S5) d'une liaison entre la connexion électrique (31, 33) via laquelle le jeton a été envoyé et la connexion de communication (32, 34) via laquelle le jeton a été reçu.

2. Procédé selon la revendication 1,
**caractérisé par** :
- l'envoi (S1) de respectivement un jeton univoque individuel via au moins deux des connexions électriques (31, 33) par l'appareil (1) ;
- réception (S4) des jetons renvoyés via au moins deux des connexions de communication (32, 34) par l'appareil (1) ; et
- établissement (S5) de respectivement une liaison entre la connexion électrique (31, 33) respective via laquelle le jeton respectif a été envoyé et la connexion de communication (32, 34) respective via laquelle le jeton respectif a été reçu.

3. Procédé selon l'une des revendications précédentes,
**caractérisé en ce que**
l'envoi (S1) du jeton par l'appareil (1) s'effectue au moyen d'une manipulation d'au moins un paramètre de l'une des connexions électriques (31, 33).

4. Procédé selon l'une des revendications précédentes,
**caractérisé en ce que**
le paramètre est formé par une tension électrique de la connexion électrique (31, 33), et **en ce que** la manipulation correspond à au moins un des paramètres suivantes :
- une modulation de fréquence ;
- une modulation par déplacement d'amplitude ; et/ou
- un changement de polarité.

5. Procédé selon l'une des revendications précédentes,
**caractérisé en ce que**
l'envoi (S1) d'un jeton par le dispositif (1) n'est effectué qu'après une invitation par un dispositif (21, 22).

6. Procédé permettant d'établir une liaison entre des connexions électriques (31, 33) existant entre un appareil (1) et plusieurs dispositifs (21, 22) et des connexions de communication (32, 34) existant entre ledit appareil (1) et lesdits plusieurs dispositifs (21, 22), comprenant les étapes :
- réception d'un message de diffusion via les connexions électriques (31, 33) et préparation à la réception d'un jeton par le dispositif (21, 22) ;
- réception (S2) du jeton envoyé via l'une des connexions électriques (31, 33) entre l'appareil (1) et un dispositif (21, 22) par le dispositif (21, 22) ; et
- renvoi (S3) du jeton reçu via la connexion de communication (32, 34) du dispositif (21, 22) pour établir la liaison entre la connexion de communication (32, 34) et la connexion électrique (31, 33) via laquelle le jeton a été reçu.

7. Procédé selon la revendication 6,
**caractérisé en ce que**
le dispositif (21, 22), avant de recevoir (S2) le jeton, envoie une invitation à envoyer un jeton via la connexion de communication (32, 34) à l'appareil (1).

8. Procédé selon la revendication 6 ou 7,
**caractérisé en ce que**
le dispositif (21, 22), avant de le renvoyer (S3), modifie le jeton reçu au moyen d'une fonction cryptographique et renvoie le jeton modifié à l'appareil (1).

9. Unité (10) permettant d'établir une liaison entre des connexions électriques (31, 33) existant entre un appareil (1) comprenant ladite unité (1) et plusieurs dispositifs (21, 22) et des connexions de communication (32, 34) existant entre ledit appareil (1) et lesdits plusieurs dispositifs (21, 22), comprenant :
- un moyen d'émission (101) pour envoyer (S1) un message de diffusion annonçant un jeton via les connexions électriques (31, 33) ;
- un moyen d'émission (101) pour envoyer (S1) un jeton via l'une des connexions électriques (31, 33) ;
- un moyen de réception (102) pour recevoir (S4) le jeton renvoyé via l'une des connexions de communication (32, 34) ; et
- un moyen de liaison (103) pour établir (S5) une liaison entre la connexion électrique (31, 33) via laquelle le jeton a été envoyé et la connexion de communication (32, 34) via laquelle le jeton a été reçu.

10. Unité (10) selon la revendication 9,
**caractérisée en ce que**
l'unité (10) est conçue comme un gestionnaire smart grid d'un réseau de type smart grid.

11. Appareil (1), en particulier borne de recharge pour voiture électrique, comprenant une unité (10) selon la revendication 9 ou 10.

12. Dispositif (21, 22) permettant d'établir une liaison entre des connexions électriques (31, 33) existant entre un appareil (1) et plusieurs dispositifs (21, 22) et des connexions de communication (32, 34) existant entre ledit appareil (1) et lesdits plusieurs dispositifs (21, 22), comprenant :
- un moyen de réception (212, 222) pour recevoir (S2) un message de diffusion annonçant un jeton via les connexions électriques (31, 33) ;
- un moyen de réception (212, 222) pour recevoir (S2) un jeton envoyé via une connexion électrique (31, 33) entre l'appareil (1) et le dispositif (21, 22) ; et
- un moyen d'émission (211, 221) pour renvoyer (S3) le jeton reçu via la connexion de communication (32, 34) du dispositif (21, 22) à l'appareil (1) pour établir une liaison entre la connexion de communication (32, 34) et la connexion électrique (31, 33) via laquelle le jeton a été reçu.

13. Dispositif (21, 22) selon la revendication 12,
**caractérisé en ce que**
le dispositif (21, 22) est conçu comme un noeud smart grid d'un réseau de type smart grid.

14. Voiture électrique destinée à être rechargée sur une borne de recharge, comprenant un dispositif (21, 22) selon la revendication 12 ou 13.
